(19) Europäisches Patentamt / European Patent Office / Office européen des brevets

(11) **EP 3 633 666 B1**

(12) **EUROPEAN PATENT SPECIFICATION**

(45) Date of publication and mention
of the grant of the patent:
**03.09.2025 Bulletin 2025/36**

(21) Application number: **17911037.4**

(22) Date of filing: **13.07.2017**

(51) International Patent Classification (IPC):
*G09G 3/3208* *(2016.01)*

(52) Cooperative Patent Classification (CPC):
**G09G 3/3208;** G09G 2320/0626; G09G 2320/0646;
G09G 2320/0686; G09G 2340/06; G09G 2360/16

(86) International application number:
**PCT/CN2017/092729**

(87) International publication number:
**WO 2018/214252 (29.11.2018 Gazette 2018/48)**

(54) **BRIGHTNESS ADJUSTMENT SYSTEM**

HELLIGKEITSANPASSUNGSSYSTEM

SYSTÈME DE RÉGLAGE DE LUMINOSITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2017 CN 201710374673**

(43) Date of publication of application:
**08.04.2020 Bulletin 2020/15**

(73) Proprietor: **Shenzhen China Star Optoelectronics
Semiconductor
Display Technology Co., Ltd.
Shenzhen, Guangdong 518132 (CN)**

(72) Inventor: **XU, Jing**
**Shenzhen**
**Guangdong 518132 (CN)**

(74) Representative: **Murgitroyd & Company**
**165-169 Scotland Street**
**Glasgow G5 8PL (GB)**

(56) References cited:
WO-A1-2016/072129    CN-A- 1 892 311
CN-A- 103 871 358    CN-A- 105 529 002
CN-A- 106 205 488    KR-A- 20140 021 325
KR-A- 20150 015 235    US-A1- 2011 050 934
US-A1- 2014 160 142    US-A1- 2017 061 595
US-A1- 2017 116 902    US-B2- 8 619 224

**Description**

Field of the Invention

The present invention relates to the field of display techniques, and in particular to a luminance adjustment system.

Background of the Invention

The panel display device provides the advantages of thinness, power-saving, radiation-free, and so on, and is widely applied to various fields. The known panel display device mainly comprises liquid crystal display (LCD) and organic light-emitting diode (OLED) display.

The OLED display provides the advantages of active light-emitting, need for backlight source, low driving voltage, high illumination efficiency, quick response time, high clearness and contrast, near 180° viewing angle, wide operation temperature range, applicable to flexible panel and large-area full-color display, and is regarded as the most promising display technology.

The OLED display comprises a plurality of pixels arranged in an array, with each pixel comprising: a red sub-pixel (R), a green sub-pixel (G), and a blue sub-pixel (B), and each sub-pixel disposed with an OLED. The OLED usually comprises: an anode, a hole injection layer disposed on the anode, a hole transport layer disposed on the hole injection layer, an organic light-emitting layer disposed on the hole transport layer, an electron transport layer disposed on the organic light-emitting layer, an electron injection layer disposed on the electron transport layer, and a cathode disposed on the electron injection layer. The operation theory of the OLED display is that the semiconductor material and the organic light-emitting material driven by the electrical field to emit light through carrier injection and combination.

At present, the OLED display ageing and power-consumption problems are more prominent. In known technique, an approach to address the OLED display ageing and power-consumption problems is:
Using average picture level (APL) algorithm to compute the luminance intensity of the display screen. If the screen has too high a luminance intensity, the overall luminance is reduced by adjusting data signal, gamma voltage, or OLED voltage, which achieves reducing OLED power-consumption as well as slowing down OLED ageing.

US application publication number 2017/116902 A1 discloses a device and a method for processing a waited display picture of an OLED display device, wherein the device adjusts grayscale values using a block as a unit, and the difference of luminous efficiency or light transmittance of different color components is also considered so as to effectively improve the life of the OLED display device. US application publication number 2014/160142 A1 discloses an organic light emitting display including a display panel including a compensation area setting unit for selecting an additional compensation requirement area, that is more excessively degraded than an average degradation, based on degradation detection data indicating a degradation degree of organic light emitting diodes formed in the pixels. US application publication number 2011/050934 A1 discloses an image processing apparatus for performing edge preserving smoothing with fewer operations, and a method and a program for the same. US application publication number 20170061595A1 discloses reducing display unevenness of the brightness in a luminance adjustment system wherein unit 111 counts the number of high-brightness edge pixels. KR 10-2015-0015235A proposes an organic light emitting diode display device having a display panel which includes data lines, gate lines, and pixels arranged with a matrix shape in the intersection region of the gate lines and the gate lines, and is virtually separated into blocks; an image processing part which receives digital image data to be supplied to the pixels and modulates the digital image data; a data driving part which changes the modulated digital image data into analog data voltages and supplies them to the data lines; and a gate driving part which successively outputs gate pulses to the gate lines. KR 10-2014-0021325A proposes an organic light emitting diode display device having a driving part analyzing a RGB signal, calculating a boundary intensity for multiple pixels and generating a modulated RGB signal by reducing the brightness of the multiple pixels according to the boundary intensity; and a display panel for displaying an image using the modulated RGB signal.

However, the above approach has a shortcoming: for high luminance intensity images with high luminance contrast, the overall image luminance will be reduced to cause the contrast also reduced, as well as losing the details in darker part of the image, resulting in degraded display quality.

SUMMARY OF THE INVENTION

The invention is set out in the appended set of claims. The object of the present invention is to provide a luminance adjustment system, able to maintain details in darker part of the image, and to adjust the luminance of bright and complex part of the image to a greater extent.

Compared to the known techniques, the present invention provides the following advantages. The present invention provides a luminance adjustment system, by dividing an image into blocks, and combined with the luminance representative value and the amount of edge information amount indicating the complexity of the image of each block, to perform an individual luminance adjustment on each block, so that a more accurate adjustment can be achieved. As such, the present invention can maintain details in darker part of the image, and to adjust the luminance of bright and complex part of the image to a greater extent.

BRIEF DESCRIPTION OF THE DRAWINGS

To make the technical solution of the embodiments according to the present invention, a brief description of the drawings that are necessary for the illustration of the embodiments will be given as follows. Apparently, the drawings described below show only example embodiments of the present invention and for those having ordinary skills in the art, other drawings may be easily obtained from these drawings without paying any creative effort. In the drawings:

Figure 1 is a schematic view showing a block diagram of the luminance adjustment system according to the present invention;

Figure 2 is a schematic view showing the block division module of the luminance adjustment system dividing a frame into blocks according to the present invention;

Figure 3 is a schematic view showing the adjustment gain calculation module of the luminance adjustment system presetting target luminance for grayscale 255 under different luminance representative value APL according to the present invention;

Figure 4 is a schematic view showing the adjustment gain calculating module of the luminance adjustment system presetting the relation between edge information amount and edge luminance adjustment coefficient $K_{edge}$ according to the present invention;

Figure 5 is a schematic view showing the gain smooth processing module of the luminance adjustment system performing calibration on the luminance adjustment coefficient of each block according to the present invention.

DETAILED DESCRIPTION OF THE PREFERRED EMBODIMENTS

To further explain the technique means and effect of the present invention, the following uses preferred embodiments and drawings for detailed description.

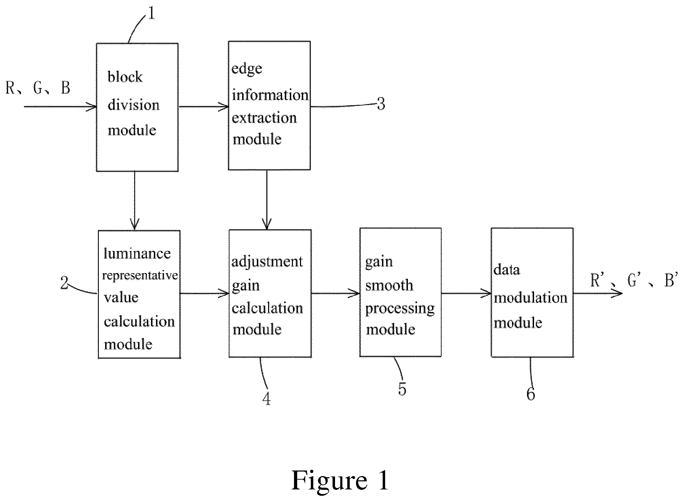

Referring to Figure 1, the present invention provides a luminance adjustment system, comprising: a block division module 1, a luminance representative value calculation module 2 electrically connected to the block division module 1, an edge information extraction module 3 electrically connected to the block division module 1, an adjustment gain calculation module 4 electrically connected to the luminance representative value calculation module 2 and the edge information extraction module 3, a gain smooth processing module 5 electrically connected to the adjustment gain calculation module 4, and a data modulation module 6 electrically connected to the gain smooth processing module 5.

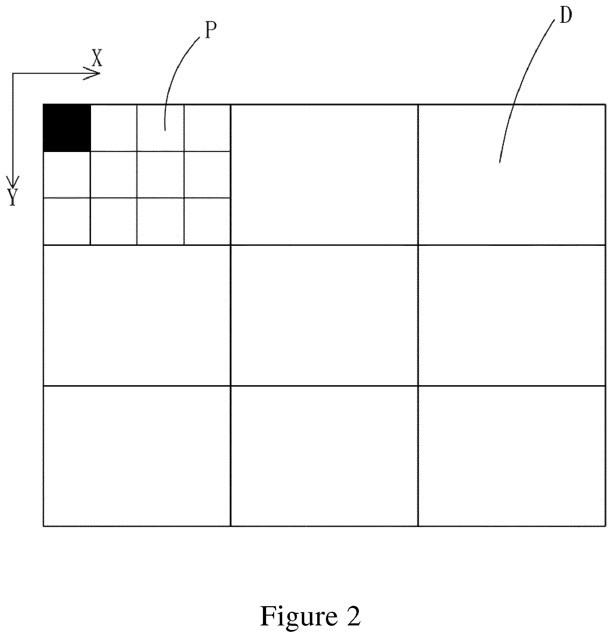

Refer to Figure 1 and Figure 2. The block division module 1 is for receiving original image data and dividing image into MxN blocks D along X-direction and Y-direction; wherein, M and N both are positive integers; each block D comprises a plurality of pixels P arranged in an array, and the original image data of each pixel P comprises: red original image data R, green original image data G, and blue original image data B.

The luminance representative value calculation module 2 is for obtaining a luminance representative value for each block D.

Specifically, the luminance representative value calculation module 2 obtains the luminance representative value of each block D as follows:

First, obtaining a luminance feature value TBP of each pixel P in a block D.

Moreover, using one of the following two approaches to obtain the luminance feature value TBP of each pixel P in a block D:

1. extracting a maximum luminance value corresponding to the red original image data R, green original image data G, and blue original image data B of a pixel P as the luminance feature value TBP, i.e.:

$$TBP=Max(R, G, B);$$

2. translating the red original image data R, green original image data G, and blue original image data B of a pixel P to YCbCr color space, and then calculating the luminance feature value TBP with the following:

$$TBP = 0.299R + 0.587G + 0.114B.$$

Then, calculating an average of the luminance feature values TBP of all the pixels P in the block D as the luminance representative value (average picture level, APL) of the block.

The edge information extraction module 3 is for analyzing the original image data of each block D to obtain an edge information amount of each block D.

Specifically, the edge information extraction module 3 uses Sobel operator for edge detection. Take each block comprising 3x3 pixels P as example. The X-direction Sobel operator $Sobel_X$ and Y-direction Soble operator $Sobel_Y$ are respectively as:

$$\text{Sobel}_X = \begin{bmatrix} -1 & 0 & +1 \\ -2 & 0 & +2 \\ -1 & 0 & +1 \end{bmatrix}$$

$$\text{Sobel}_Y = \begin{bmatrix} +1 & +2 & +1 \\ 0 & 0 & 0 \\ -1 & -2 & -1 \end{bmatrix}$$

If A is an original image of a block D, the image of X-direction edge detection is:

$$\begin{bmatrix} -1 & 0 & +1 \\ -2 & 0 & +2 \\ -1 & 0 & +1 \end{bmatrix} \times A$$

and the image of Y-direction edge detection is:

$$\begin{bmatrix} +1 & +2 & +1 \\ 0 & 0 & 0 \\ -1 & -2 & -1 \end{bmatrix} \times A$$

Moreover, the edge information extraction module 3 obtains the edge information amount of each block D as follows:

First, calculating an X-direction grayscale value $G_X$ and a Y-direction grayscale $G_Y$ of each pixel P in a block D:

$$G_X = Sobel_X \times f(a,b);$$

$$G_Y = Sobel_Y \times f(a,b);$$

wherein f(a,b) is the luminance value of the original image data corresponding to the pixel P with X-direction coordinate a and Y-direction coordinate b in the block D; taking each block D comprising 3x3 pixels P as example, then:

$G_X$= (-1)×f(x-1, y-1)+ 0×f(x, y-1)+ 1×f(x+1, y-1)+(-2)×f(x-1, y)+ 0×f(x, y)+2×f(x+1, y)+(-1)×f(x-1, y+1)+ 0×f(x, y+1)+ 1×f(x+1, y+1)

$G_Y$= 1×f(x-1, y-1)+ 2×f(x, y-1)+ 1×f(x+1, y-1)+0×f(x-1, y)+ 0×f(x, y)+0×f(x+1, y)+(-1)×f(x-1, y+1)+(-2)×f(x, y+1)+ (-1)×f(x+1, y+1)

Then, calculating a gradient G of each pixel P in the block D:

$$G = \sqrt{G_X{}^2 + G_Y{}^2}$$

Then, comparing the gradient G of each pixel P in the block D with a default threshold; if the gradient G of a pixel being greater than the default threshold, determining the pixel as an edge point;

Finally, summing the number of the pixels P determined as edge points in the block D as the edge information amount of the block D. The edge information amount indicates the image complexity. The higher the edge information amount is, the more complex the image is.

The adjustment gain calculation module 4 is for calculating a luminance adjustment coefficient of each block D based on the luminance representative value and the edge information amount of each block D.

Specifically, the adjustment gain calculation module 4 calculates the luminance adjustment coefficient of each block D as follows:

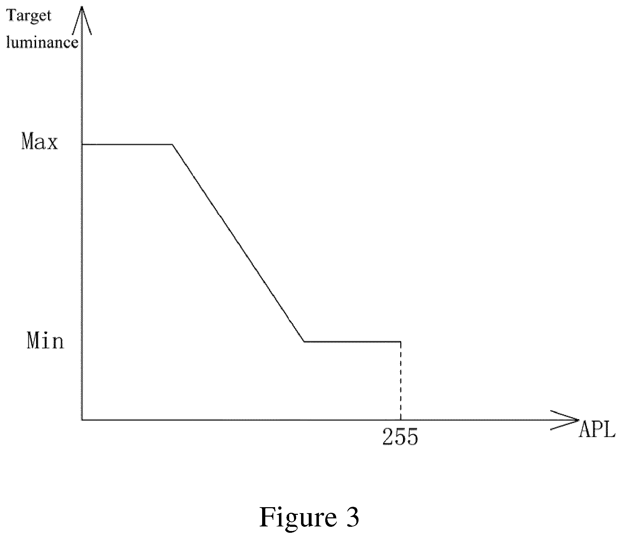

First, as shown in Figure 3, presetting a target luminance for 255 grayscale 255 at different luminance representative value APL, calculating a normal luminance adjustment coefficient $K_{APL}$ of each block D as following:

$$K_{APL}=\text{target luminance/luminance before adjustment;}$$

For example, assuming that the luminance of a block D before adjustment is grayscale 255, the luminance representative value APL is 255. On the condition that the luminance representative value APL is 255, the target luminance of grayscale 255 is Min=64. Then,

$$K_{APL}=64/255=0.25;$$

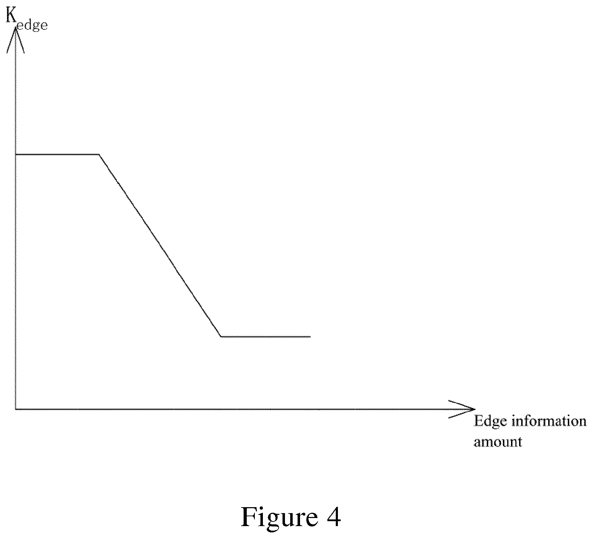

Then, as shown in Figure 4, presetting a relation between the edge information amount and an edge luminance adjustment coefficient $K_{edge}$, looking for the corresponding edge luminance adjustment coefficient $K_{edge}$ based on the edge information amount of each block D;

Then, calculating the luminance adjustment coefficient K as following:

$$K=K_{APL}\times K_{edge}.$$

It should be noted that the target luminance for grayscale 255 decreases as the grayscale corresponding to the luminance representative value increases. That is, the higher the grayscale corresponding to the luminance representative value APL is, the lower the target luminance for grayscale 255 is. The edge luminance adjustment coefficient $K_{edge}$ decreases as the edge information amount increases. That is, the larger the edge information amount is, the image is more complex, the lower the luminance is adjusted to so as to match the property that human eyes are more sensitive to complex image at lower luminance. Therefore, the luminance of complex image block D is adjusted to a greater extent.

The gain smooth processing module 5 is for performing calibration the luminance adjustment coefficient of each block D to obtain a luminance adjustment calibration value of each block D so as to performing smooth processing on each pixel P in each block D to prevent luminance at borders between blocks D from mutating.

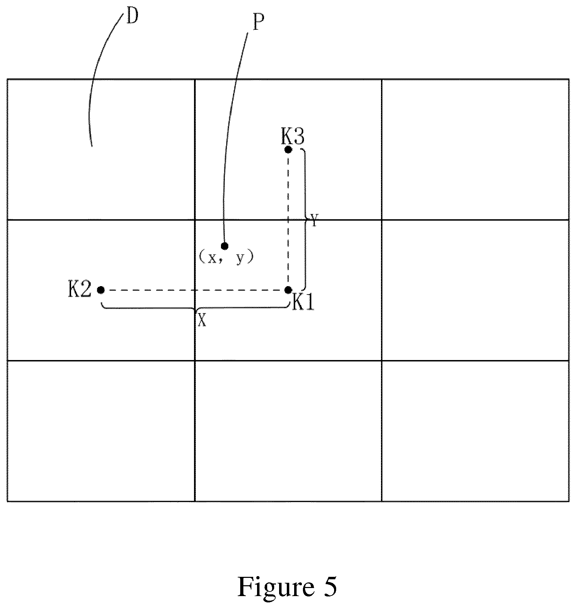

Specifically, as shown in Figure 5, the gain smooth processing module 5 performs calibration on the luminance adjustment coefficient of each block D as follows:

First, selecting a block D, calculating a horizontal gain $K_H$ of an X-direction adjacent block D, and a vertical gain $K_V$ of a Y-direction adjacent block D for the selected block D as following:

$$K_H=K_1+(K_2-K_1)\times x/X;$$

$$K_V=K_1+(K_3-K_1)\times y/Y;$$

wherein $K_1$ is the luminance adjustment coefficient of the selected block D, $K_2$ is the luminance adjustment coefficient of X-direction adjacent block D of the selected block D, $K_3$ is the luminance adjustment coefficient of Y-direction adjacent block D of the selected block D, x and y are X-direction and Y-direction coordinates of each pixel P with respect to a center pixel P of the selected block D, X is the horizontal distance between the center pixel P of the selected block D and the center pixel P of the X-direction adjacent block D, and Y is the vertical distance between the center pixel P of the selected block D and the center pixel P of the Y-direction adjacent block D;

Then, calculating the luminance adjustment calibration value K' of each pixel P in the selected block D as following:

$$K'=(K_H+K_V)/2.$$

The data modulation module electrically 6 is for performing modulation on the original image data based on the luminance adjustment calibration value of each block D to obtain a modulated image data of each block D so as to perform individual luminance modulation on each block D.

Specifically, the data modulation module 6 obtains the modulated image data of each block as follows: the modulated image data of a block D = the luminance adjustment calibration value K' of each pixel P in the block D $\times$ the original image data of the corresponding pixel P in the block D, i.e.:

$$R'=K' \times R;$$

$$G'=K' \times G;$$

$$B'=K' \times B;$$

wherein R', G', and B' are modulated red image data, modulated green image data, and modulated blue image data respectively.

Therefore, the luminance adjustment system of the present invention can, by dividing an image into blocks, and combining with the luminance representative value and the amount of edge information amount indicating the complexity of the image of each block, perform an individual luminance adjustment on each block, so that a more accurate adjustment can be achieved. As such, the present invention can maintain details in darker part of the image, and to adjust the luminance of bright and complex part of the image to a greater extent.

In summary, the present invention provides a luminance adjustment system, by dividing an image into blocks, and combined with the luminance representative value and the amount of edge information amount indicating the complexity of the image of each block, to perform an individual luminance adjustment on each block, so that a more accurate adjustment can be achieved. As such, the present invention can maintain details in darker part of the image, and to adjust the luminance of bright and complex part of the image to a greater extent.

It should be noted that in the present disclosure the terms, such as, first, second are only for distinguishing an entity or operation from another entity or operation, and does not imply any specific relation or order between the entities or operations. Also, the terms "comprises", "include", and other similar variations, do not exclude the inclusion of other non-listed elements. Without further restrictions, the expression "comprises a..." does not exclude other identical elements from presence besides the listed elements.

## Claims

1. A luminance adjustment system, comprising:

   a block division module (1) for receiving an original image data and dividing the original image data into MxN blocks (D) along X-direction and Y-direction, wherein M and N are both positive integers, each block (D) comprises a plurality of pixels arranged in an array, and the original image data of each pixel comprises: red original image data, green original image data, and blue original image data;
   a luminance representative value calculation module (2) electrically connected to the block division module (1) for obtaining a luminance representative value for each block (D);
   an edge information extraction module (3) electrically connected to the block division module (1) for analyzing the original image data of each block (D) to obtain an edge information amount of each block (D), wherein the edge information extraction module (3) uses Sobel operators for edge detection to obtain the edge information amount of each block (D), and the edge information extraction module (3) obtains the edge information amount of each block (D) by:

   calculating an X-direction grayscale value $G_X$ and a Y-direction grayscale $G_Y$ of each pixel in a block (D) by:

   $$G_X = Sobel_X \times f(a,b);$$

   and

   $$G_Y = Sobel_Y \times f(a,b);$$

wherein f(a,b) is the luminance value of the original image data corresponding to the pixel with X-direction coordinate a and Y-direction coordinate b in the block (D), Sobel$_X$ is an X-direction Sobel operator, and Sobely is a Y-direction Sobel operator;

calculating a gradient G of each pixel in the block (D) by:

$$G = \sqrt{G_X{}^2 + G_Y{}^2} \ ;$$

comparing the gradient G of each pixel in the block (D) with a default threshold, and if the gradient G of a pixel is greater than the default threshold, determining the pixel as an edge point; and

summing a number of the pixels determined as the edge points in the block (D) as the edge information amount of the block (D);

an adjustment gain calculation module (4), electrically connected to the luminance representative value calculation module (2) and the edge information extraction module (3),

for calculating a luminance adjustment coefficient of each block (D) based on the luminance representative value and the edge information amount of each block (D), wherein the adjustment gain calculation module (4) calculates the luminance adjustment coefficient of each block (D) by:

presetting a target luminance for grayscale 255 based on the luminance representative value, also known as APL, so that the target luminance decreases as the grayscale corresponding to the luminance representative value APL increases, and calculating a normal luminance adjustment coefficient K $_{APL}$ of each block (D) by:

$$K_{APL} = \text{target luminance/luminance before adjustment;}$$

presetting a relation between the edge information amount and an edge luminance adjustment coefficient K$_{edge}$, so that the edge luminance adjustment coefficient K$_{edge}$ decreasing as the edge information amount increasing, and looking for the corresponding edge luminance adjustment coefficient K$_{edge}$ based on the edge information amount of each block (D); and

calculating the luminance adjustment coefficient K by:

$$K = K_{APL} \times K_{edge};$$

a gain smooth processing module (5), electrically connected to the adjustment gain calculation module (4), for performing calibration on the luminance adjustment coefficient of each block (D) to obtain a luminance adjustment calibration value of each block (D) wherein the gain smooth processing module (5) is configured to perform calibration on the luminance adjustment coefficient of each block (D) by:

selecting a block (D), and calculating a horizontal gain K$_H$ of the block (D) and an X-direction adjacent block, and a vertical gain K$_V$ of the block (D) and a Y-direction adjacent block for the selected block (D) by:

$$K_H = K_1 + (K_2 - K_1) \times x/X,$$

and

$$K_V = K_1 + (K_3 - K_1) \times y/Y;$$

wherein K$_1$ is the luminance adjustment coefficient of the selected block (D), K$_2$ is the luminance adjustment coefficient of the X-direction adjacent block of the selected block (D), K$_3$ is the luminance adjustment coefficient of the Y-direction adjacent block of the selected block (D), x and y are X-direction and Y-direction coordinates of each pixel with respect to a center pixel of the selected block (D), X is a horizontal distance between the center pixel of the selected block (D) and a center pixel of the X-direction adjacent block, and Y is a vertical distance between the center pixel of the selected block (D) and a center pixel of the Y-direction adjacent block; and then

calculating the luminance adjustment calibration value K' of each pixel in the selected block (D) by:

$$K'=(K_H+ K_V)/2;$$

and

a data modulation module (6), electrically connected to the gain smooth processing module (5), for performing modulation on the original image data based on the luminance adjustment calibration value of each block (D) to obtain a modulated image data of each block (D) so as to perform individual luminance modulation on each block (D),

wherein the luminance representative value calculation module (2) is configured to obtain the luminance representative value of each block (D) by: obtaining a luminance feature value, also known as TBP, of each pixel in a block (D); and

calculating an average of the luminance feature values TBP of all the pixels in the block (D) as the luminance representative value APL of the block (D).

2. The luminance adjustment system as claimed in Claim 1, wherein the luminance representative value calculation module (2) is configured to obtain the luminance feature value TBP of each pixel in the block (D) by:
extracting a maximum luminance value corresponding to the red original image data, green original image data, and blue original image data of a pixel as the luminance feature value TBP by:

$$TBP=Max(R, G, B).$$

3. The luminance adjustment system as claimed in Claim 1, wherein the luminance representative value calculation module (2) is configured to obtain the luminance feature value TBP of each pixel in the block (D) by:
translating the red original image data, green original image data, and blue original image data of a pixel to YCbCr color space, and then calculating the luminance feature value TBP by:

$$TBP=0.299R+0.587G+0.114B.$$

4. The luminance adjustment system as claimed in Claim 1, wherein each block (D) comprises 3x3 pixels, the X-direction Sobel operator $Sobel_X$ and the Y-direction Soble operator $Sobel_Y$ are respectively as:

$$Sobel_X = \begin{bmatrix} -1 & 0 & +1 \\ -2 & 0 & +2 \\ -1 & 0 & +1 \end{bmatrix},$$

and

$$Sobel_Y = \begin{bmatrix} +1 & +2 & +1 \\ 0 & 0 & 0 \\ -1 & -2 & -1 \end{bmatrix}$$

5. The luminance adjustment system as claimed in Claim 1, wherein the data modulation module (6) is configured to obtain the modulated image data of each block (D) by:
the modulated image data of a block (D) = the luminance adjustment calibration value K' of each pixel in the block (D) × the original image data of the corresponding pixel in the block (D), i.e.:

$$R'=K' \times R;$$

$$G'=K' \times G;$$

and

$$B'=K' \times B;$$

wherein R', G', and B' are modulated red image data, modulated green image data, and modulated blue image data respectively.

**Patentansprüche**

1. Ein Helligkeitsanpassungssystem, umfassend:

ein Blockunterteilungsmodul (1) zum Empfangen von Originalbilddaten und zum Unterteilen der Originalbilddaten entlang einer X-Richtung und einer Y-Richtung in M×N Blöcke (D), wobei M und N jeweils positive ganze Zahlen sind, wobei jeder Block (D) eine Vielzahl von in einer Matrix angeordneten Pixeln umfasst und die Originalbilddaten jedes Pixels rote Originalbilddaten, grüne Originalbilddaten und blaue Originalbilddaten umfassen;

ein Helligkeitsrepräsentationswertberechnungsmodul (2), das elektrisch mit dem Blockunterteilungsmodul (1) verbunden ist und zum Erhalten eines Helligkeitsrepräsentationswerts für jeden Block (D) dient;

ein Kanteninformations-Extraktionsmodul (3), das elektrisch mit dem Blockunterteilungsmodul (1) verbunden ist und zum Analysieren der Originalbilddaten jedes Blocks (D) zum Erhalten einer Kanteninformationsmenge jedes Blocks (D) dient, wobei das Kanteninformations-Extraktionsmodul (3) Sobel-Operatoren zur Kantenerkennung verwendet, um die Kanteninformationsmenge jedes Blocks (D) zu erhalten, wobei das Kanteninformations-Extraktionsmodul (3) die Kanteninformationsmenge jedes Blocks (D) durch Folgendes erhält:

Berechnen eines Grauwerts $G_X$ in X-Richtung und eines Grauwerts $G_Y$ in Y-Richtung jedes Pixels in einem Block (D) mittels:

$$G_X = \text{Sobel}_X \times f(a, b);$$

und

$$G_Y = \text{Sobel}_Y \times f(a, b);$$

wobei f(a, b) der Helligkeitswert der Originalbilddaten entsprechend dem Pixel mit X-Richtung-Koordinate a und Y-Richtung-Koordinate b im Block (D) ist, $\text{Sobel}_X$ ein Sobel-Operator in X-Richtung und $\text{Sobel}_Y$ ein Sobel-Operator in Y-Richtung ist;

Berechnen eines Gradienten G jedes Pixels im Block (D) mittels:

$$G = \sqrt{G_X{}^2 + G_Y{}^2};$$

Vergleichen des Gradienten G jedes Pixels im Block (D) mit einem Standardschwellenwert, und wenn der Gradient G eines Pixels größer als der Standardschwellenwert ist, Bestimmen des Pixels als ein Kantenpunkt; und

Summieren einer Anzahl von als Kantenpunkten bestimmten Pixeln im Block (D) als die Kanteninformationsmenge des Blocks (D);

ein Verstärkungsanpassungs-Berechnungsmodul (4), das elektrisch mit dem Helligkeitsrepräsentationswertberechnungsmodul (2) und dem Kanteninformations-Extraktionsmodul (3) verbunden ist, zum Berechnen eines Helligkeitsanpassungskoeffizienten jedes Blocks (D) basierend auf dem Helligkeitsrepräsentationswert und der Kanteninformationsmenge jedes Blocks (D),

wobei das Verstärkungsanpassungs-Berechnungsmodul (4) den Helligkeitsanpassungskoeffizienten jedes Blocks (D) durch Folgendes berechnet:

Voreinstellen einer Zielhelligkeit für Grauwert 255 basierend auf dem Helligkeitsrepräsentationswert, auch bekannt als APL, sodass die Zielhelligkeit abnimmt, wenn der dem Helligkeitsrepräsentationswert APL entsprechende Grauwert zunimmt, und Berechnen eines normalen Helligkeitsanpassungskoeffizienten $K_{APL}$ jedes Blocks (D) mittels:

$$K_{APL} = \text{Zielhelligkeit} / \text{Helligkeit vor Anpassung};$$

Voreinstellen einer Beziehung zwischen der Kanteninformationsmenge und einem Kantenhelligkeitsanpassungskoeffizienten $K_{edge}$, sodass der Kantenhelligkeitsanpassungskoeffizient $K_{edge}$ abnimmt, wenn die Kanteninformationsmenge zunimmt, und Suchen des entsprechenden Kantenhelligkeitsanpassungskoeffizienten $K_{edge}$ basierend auf der Kanteninformationsmenge jedes Blocks (D); und Berechnen des Helligkeitsanpassungskoeffizienten K mittels:

$$K = K_{APL} \times K_{edge};$$

ein Verstärkungsglättungs-Verarbeitungsmodul (5), das elektrisch mit dem Verstärkungsanpassungs-Berechnungsmodul (4) verbunden ist, zum Durchführen eines Kalibrierens des Helligkeitsanpassungskoeffizienten jedes Blocks (D), um einen Helligkeitsanpassungskalibrierwert jedes Blocks (D) zu erhalten, wobei das Verstärkungsglättungs-Verarbeitungsmodul (5) dazu konfiguriert ist, die Kalibrierung des Helligkeitsanpassungskoeffizienten jedes Blocks (D) durch Folgendes durchzuführen: Auswählen eines Blocks (D) und Berechnen eines horizontalen Verstärkungswerts $K_H$ des Blocks (D) und eines benachbarten Blocks in X-Richtung sowie eines vertikalen Verstärkungswerts $K_V$ des Blocks (D) und eines benachbarten Blocks in Y-Richtung für den ausgewählten Block (D) mittels:

$$K_H = K_1 + (K_2 - K_1) \times x/X;$$

und

$$K_V = K_1 + (K_3 - K_1) \times y/Y$$

wobei $K_1$ der Helligkeitsanpassungskoeffizient des ausgewählten Blocks (D), $K_2$ der Helligkeitsanpas-sungskoeffizient des benachbarten Blocks in X-Richtung des ausgewählten Blocks (D), $K_3$ der Hellig-keitsanpassungskoeffizient des benachbarten Blocks in Y-Richtung des ausgewählten Blocks (D) ist, x und y X-Richtung- bzw. Y-Richtung-Koordinaten jedes Pixels relativ zu einem Mittelpixel des ausgewählten Blocks (D) sind, X ein horizontaler Abstand zwischen dem Mittelpixel des ausgewählten Blocks (D) und einem Mittelpixel des benachbarten Blocks in X-Richtung ist und Y ein vertikaler Abstand zwischen dem Mittelpixel des ausgewählten Blocks (D) und einem Mittelpixel des benachbarten Blocks in Y-Richtung ist; und
Berechnen des Helligkeitsanpassungskalibrierwerts K' jedes Pixels im ausgewählten Block (D) mittels;

$$K' = (K_H + K_V)/2;$$

und
ein Datenmodulationsmodul (6), das elektrisch mit dem Verstärkungsglättungs-Verarbeitungsmodul (5) verbunden ist, zum Durchführen einer Modulation der Originalbilddaten basierend auf dem Helligkeitsanpassungskalibrierwert jedes Blocks (D), um modulierte Bilddaten jedes Blocks (D) zu erhalten, sodass eine individuelle Helligkeitsmodulation für jeden Block (D) durchgeführt ist,
wobei das Helligkeitsrepräsentationswertberechnungsmodul (2) dazu konfiguriert ist, den Helligkeitsrepräsentationswert jedes Blocks (D) durch Folgendes zu erhalten:

Erhalten eines Helligkeitsmerkmalwerts, auch bekannt als TBP, jedes Pixels in einem Block (D); und
Berechnen eines Mittelwerts der Helligkeitsmerkmalwerte TBP aller Pixel im Block (D) als Helligkeitsrepräsentationswert APL des Blocks (D).

**2.** Helligkeitsanpassungssystem nach Anspruch 1, wobei das Helligkeitsrepräsentationswertberechnungsmodul (2) dazu konfiguriert ist, den Helligkeitsmerkmalwert TBP jedes Pixels im Block (D) durch Folgendes zu erhalten: Extrahieren eines maximalen Helligkeitswerts, der den roten Originalbilddaten, den grünen Originalbilddaten und den blauen Originalbilddaten eines Pixels entspricht, als ein Helligkeitsmerkmalwert TBP mittels:

$$TBP = Max(R, G, B).$$

**3.** Helligkeitsanpassungssystem nach Anspruch 1, wobei das Helligkeitsrepräsentationswertberechnungsmodul (2) dazu konfiguriert ist, den Helligkeitsmerkmalwert TBP jedes Pixels im Block (D) durch Folgendes zu erhalten: Umrechnen der roten Originalbilddaten, der grünen Originalbilddaten und der blauen Originalbilddaten eines Pixels in YCbCr-Farbraum und dann Berechnen des Helligkeitsmerkmalwerts TBP mittels:

$$\text{TBP} = 0{,}299\text{R} + 0{,}587\text{G} + 0{,}114\text{B}.$$

4. Helligkeitsanpassungssystem nach Anspruch 1, wobei jeder Block (D) 3×3 Pixel umfasst, wobei der Sobel-Operator in X-Richtung Sobel$_X$ und der Sobel-Operator in Y-Richtung Sobel$_Y$ jeweils wie folgt definiert sind:

$$\text{Sobel}_X = \begin{bmatrix} -1 & 0 & +1 \\ -2 & 0 & +2 \\ -1 & 0 & +1 \end{bmatrix},$$

und

$$\text{Sobel}_Y = \begin{bmatrix} +1 & +2 & +1 \\ 0 & 0 & 0 \\ -1 & -2 & -1 \end{bmatrix}.$$

5. Helligkeitsanpassungssystem nach Anspruch 1, wobei das Datenmodulationsmodul (6) dazu konfiguriert ist, die modulierten Bilddaten jedes Blocks (D) durch Folgendes zu erhalten:

die modulierten Bilddaten eines Blocks (D) = der Helligkeitsanpassungskalibrierwert K' jedes Pixels im Block (D) × die Originalbilddaten des entsprechenden Pixels im Block (D), also:

$$\text{R}' = \text{K}' \times \text{R};$$

$$\text{G}' = \text{K}' \times \text{G};$$

und

$$\text{B}' = \text{K}' \times \text{B};$$

wobei R', G' und B' jeweils modulierte rote Bilddaten, modulierte grüne Bilddaten und modulierte blaue Bilddaten sind.

**Revendications**

1. Système d'ajustement de luminosité, comprenant :

un module de division de bloc (1) recevant des données d'image d'origine et divisant les données d'image d'origine
en blocs MxN (D) dans la direction X et la direction Y,
dans lequel M et N sont tous deux des entiers positifs, chaque bloc (D) comprend une pluralité de pixels agencés en réseau, et les données d'image d'origine de chaque pixel comprennent : les données d'image d'origine rouges, les données d'image d'origine vertes, et les données d'image d'origine bleues ;
un module de calcul de valeur représentative de luminosité (2) raccordé électriquement au module de division de bloc (1) pour obtenir une valeur représentative de luminosité pour chaque bloc (D) ;
un module d'extraction d'informations de contour (3) raccordé électriquement au module de division de bloc (1) pour analyser les données d'image d'origine de chaque bloc (D) afin d'obtenir une quantité d'informations de contour de chaque bloc (D), dans lequel le module d'extraction d'informations de contour (3) utilise des opérateurs Sobel pour la détection de contour afin d'obtenir la quantité d'informations de contour de chaque bloc (D), et le module d'extraction d'informations de contour (3) obtient la quantité d'informations de contour de chaque bloc (D) en :

calculant la valeur de niveau de $G_X$ de la direction X et la valeur de niveau de $G_Y$ de la direction Y de chaque pixel dans un bloc (D) par :

$$G_X = \text{Sobel}_X \times f(a,b) \;;$$

et

$$G_Y = \text{Sobel}_Y \times f(a,b) \;;$$

dans lequel f(a,b) est la valeur de luminosité des données d'image d'origine correspondant au pixel à coordonnées a de direction X et à coordonnées b de direction Y dans le bloc (D), $\text{Sobel}_X$ est un opérateur Sobel de direction X, et $\text{Sobel}_Y$ est un opérateur Sobel de direction Y ;
en calculant un gradient G de chaque pixel dans le bloc (D) par :

$$G = \sqrt{G_X{}^2 + G_Y{}^2} \;;$$

en comparant le gradient G de chaque pixel dans le bloc (D) avec un seuil par défaut, et si le gradient G d'un pixel est supérieur au seuil par défaut, en déterminant le pixel comme point de bord ; et
en additionnant le nombre de pixels déterminés comme points de bord dans le bloc (D) en tant que quantité d'informations de contour du bloc (D) ;
un module de calcul de gain d'ajustement (4),
raccordé électriquement au
module de calcul de valeur représentative de luminosité (2) et au module d'extraction d'informations de contour (3),
pour calculer le coefficient d'ajustement de luminosité
de chaque bloc (D) en se basant sur la valeur représentative de luminosité et sur la quantité d'informations de contour de chaque bloc (D), dans lequel le module de calcul de gain d'ajustement (4) calcule le coefficient d'ajustement de luminosité de chaque bloc (D) en :

prédéfinissant une luminosité cible pour niveau de gris 255 en se basant sur la valeur représentative de luminosité,
également connue sous le nom de APL,
de sorte que la luminosité cible diminue tandis que
le niveau de gris correspondant à la valeur représentative de luminosité APL augmente,
et en calculant un coefficient d'ajustement de luminosité normal
$K_{APL}$ de chaque bloc (D) par :

$$K_{APL} = \text{luminosité cible/luminosité avant ajustement} \;;$$

en prédéfinissant la relation entre la quantité d'informations de contour et un coefficient d'ajustement de luminosité de contour $K_{edge}$, de sorte que le coefficient d'ajustement de luminosité de contour $K_{edge}$ diminue tandis que la quantité d'informations de contour augmente, et en cherchant le coefficient d'ajustement de luminosité de contour $K_{edge}$ correspondant en se basant sur la quantité d'informations de contour de chaque bloc (D) ; et
en calculant le coefficient d'ajustement de luminosité K par :

$$K = K_{APL} \times K_{edge} \;;$$

un module de traitement de lissage de gain (5), raccordé électriquement au module de calcul de gain d'ajustement (4),
pour réaliser un étalonnage du coefficient d'ajustement de luminosité
de chaque bloc (D) afin d'obtenir une valeur d'étalonnage d'ajustement de luminosité de chaque bloc (D)
dans lequel
le module de traitement de lissage de gain (5)

est configuré pour réaliser
l'étalonnage du coefficient d'ajustement de luminosité de
chaque bloc (D) en :

sélectionnant un bloc (D), et calculant un gain horizontal $K_H$ du bloc (D) et une direction X du bloc adjacent, et un gain vertical $K_V$ du bloc (D) et une direction Y du bloc adjacent pour le bloc sélectionné (D) par :

$$K_H = K_1 + (K_2 - K_1) \times X/X,$$

et

$$K_V = K_1 + (K_3 - K_1) \times y/Y \ ;$$

dans lequel $K_1$ est le coefficient d'ajustement de luminosité du bloc sélectionné (D), $K_2$ est le coefficient d'ajustement de luminosité du bloc adjacent de direction X du bloc sélectionné (D), $K_3$ est le coefficient d'ajustement de luminosité du bloc adjacent de direction Y du bloc sélectionné (D), x et y sont les coordonnées de direction X et de direction Y de chaque pixel par rapport à un pixel central du bloc sélectionné (D), X est une distance horizontale entre le pixel central du bloc sélectionné (D) et le pixel central du bloc adjacent de direction X, et Y est la distance verticale entre le pixel central du bloc sélectionné (D) et un pixel central du bloc adjacent de direction Y ; puis
en calculant la valeur d'étalonnage d'ajustement de luminosité K' de chaque pixel dans le bloc sélectionné (D) par :

$$K' = (K_H + K_V)/2$$

 ; et
un module de modulation de données (6),
raccordé électriquement au module de traitement de lissage de gain (5),
pour réaliser une modulation des données d'image d'origine
basée sur la valeur d'étalonnage d'ajustement de luminosité de chaque bloc (D) afin d'obtenir des données d'image modulées de chaque bloc (D) afin de réaliser une modulation de luminosité individuelle sur chaque bloc (D), dans lequel le module de calcul de valeur représentative de luminosité (2) est configuré pour obtenir
la valeur représentative de luminosité de chaque bloc (D) en :

obtenant une valeur caractéristique de luminosité, connue également sous le nom de TBP, de chaque pixel dans un bloc (D) ; et
en calculant une moyenne des valeurs caractéristiques de luminosité TBP de tous les pixels dans le bloc (D) comme valeur représentative de luminosité APL du bloc (D).

2. Système d'ajustement de luminosité selon la revendication 1, dans lequel

le module de calcul de valeur représentative de luminosité (2) est configuré pour obtenir la valeur caractéristique de luminosité TBP de chaque pixel dans le bloc (D) en :
extrayant la valeur de luminosité maximale correspondant aux données d'image d'origine rouges, aux données d'image d'origine vertes, et aux données d'image d'origine bleues d'un pixel comme valeur caractéristique de luminosité TBP par :

$$TBP = Max(R, G, B).$$

3. Système d'ajustement de luminosité selon la revendication 1,

dans lequel le module de calcul de valeur représentative de luminosité (2) est configuré pour obtenir la valeur caractéristique de luminosité TBP de chaque pixel dans le bloc (D) en :
traduisant les données d'image d'origine rouges, les données d'image d'origine vertes, et les données d'image d'origine bleues d'un pixel en espace colorimétrique YCbCr, puis en calculant la valeur caractéristique de luminosité TBP par :

$$TBP = 0{,}299R + 0{,}587G + 0{,}114B.$$

4. Système d'ajustement de luminosité selon la revendication 1, dans lequel
   chaque bloc (D) comprend 3 x 3 pixels, opérateur Sobel de direction X Sobel$_X$ et opérateur Sobel de direction Y Sobely sont respectivement :

$$Sobel_X = \begin{bmatrix} -1 & 0 & +1 \\ -2 & 0 & +2 \\ -1 & 0 & +1 \end{bmatrix},$$

et

$$Sobel_Y = \begin{bmatrix} +1 & +2 & +1 \\ 0 & 0 & 0 \\ -1 & -2 & -1 \end{bmatrix}$$

5. Système d'ajustement de luminosité selon la revendication 1, dans lequel

   le module de modulation de données (6) est configuré pour obtenir les données d'image modulées de chaque bloc (D) par :

   les données d'image modulées d'un bloc (D) = la valeur d'étalonnage d'ajustement de luminosité K' de chaque pixel dans le bloc (D) × les données d'image d'origine du pixel correspondant dans le bloc (D), par ex. :

$$R' = K' \times R \; ;$$

$$G' = K' \times G \; ;$$

   et

$$B' = K' \times B \; ;$$

   dans lequel R', G', et B' sont des données d'image modulées rouges, des données d'image modulées vertes, et des données d'image modulées bleues respectivement.

Figure 1

Figure 2

Figure 3

Figure 4

Figure 5

**EP 3 633 666 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017116902 A1
- US 2014160142 A1
- US 2011050934 A1
- US 20170061595 A1
- KR 1020150015235 A
- KR 1020140021325 A